# EUROPEAN PATENT APPLICATION

(11) **EP 1 672 892 A1**
(43) Date of publication of application: **21.06.2006**
(21) Application number: 05027291.3
(22) Date of filing: 14.12.2005
(51) Int. Cl.: H04M 3/42

(54) **Presence system and method for computing the status of real-time communications applications**

(30) Priority: 15.12.2004 US 13265
(71) Applicant: Alcatel, 75008 Paris (FR)
(72) Inventor: Fuming, Wu, Frisco, TX 75035 (US)
(74) Representative: Schäfer, Wolfgang

(57) **Abstract**

The application relates to a presence system. Presence information of current presence systems is limited to device status and are not able to determine the presentity's status for each real-time communications applications. The application defines a so-called media status which is a function of the maximum number of simultaneous communication sessions a presentity can engage in.
A presence server (100) determines a presentity's media status and availability for engaging in real-time communication sessions in a presence system by receiving, from the presentity, a maximum number (210) of real-time interactions per real-time media types supported by the presentity, and collecting presence information (220) identifying real-time communication sessions currently engaged in by the presentity. The presence server (100) determines the media status (240) for each of the real-time media types supported by the presentity based on the maximum number (210) of interactions and the presence information (220), and determines available (240) realtime media types from the determined media statuses.

## Description

### BACKGROUND OF THE INVENTION

### Technical Field of the Invention

The present invention relates in general to a presence-based interactive communications system, and in particular, to determining the media status of a presentity.

### Description of Related Art

Presence-based interactive communication services are callee-centric, where callees (presentities) publish, in real time, their presence information (such as, the availability, activity, local time, location, current status of the active devices/applications and the corresponding preferences, etc.) to callers (presence watchers) who have subscribed to the presence information. The presence information is designed to enable the callers to more efficiently and effectively contact the callees. However, there are currently limitations on the collection and display of presence and preference information.

Currently, the presence and preference information is limited to device status and device preferences. However, as the number of devices per presentity increases, and as the number of applications (media types) per device increases, a watcher may have difficulty determining the actual availability of a presentity and/or a device of the presentity for initiating a real-time communication session with a particular media type. For example, a cell phone that supports voice communication and/or real-time text communication, such as SMS or IM, might also support multimedia communication. As another example, a personal computer (PC) may be capable of running multiple real-time applications, such as softphone or VoIP client applications for real-time voice communication, IM applications for real-time text communication, and perhaps, applications for real-time multimedia communications (video+).

Thus, on any particular device, a presentity may be capable of simultaneously engaging in multiple communication sessions of the same or different media types. For example, a presentity may subscribe to a call-waiting service that enables the presentity to engage in more than one real-time voice communication session on a particular device (e.g., desktop phone or cell phone). In addition, a presentity may be capable of simultaneously engaging in multiple communication sessions of the same or different media types across different devices. For example, a presentity may be able to simultaneously engage in multiple real-time text communication session on different devices (e.g., a personal computer and a PDA and/or cell phone). As another example, a presentity may be capable of simultaneously engaging in a real-time voice communication session on one device (e.g., desktop phone or cell phone) and a multimedia communication session on another device (e.g., personal computer, PDA or cell phone).

However, based on the current preference and presence information available to watcher's, a watcher is not able to determine the presentity's media status for each media type, nor is the watcher able to determine the presentity's overall media status. Therefore, a watcher is not able to determine the presentity's availability for engaging in real-time communication sessions of different media types.

As a result, what is needed is a presence system and method for determining a presentity's media status and availability to engage in real-time communication sessions.

### SUMMARY OF THE INVENTION

Embodiments of the present invention provide a presence server capable of receiving from a presentity a maximum number of real-time interactions per real-time media types supported by the presentity. The presence server is further capable of receiving presence information identifying real-time communication sessions currently engaged in by the presentity. The presence server is operable to determine a media status for each of the real-time media types supported by the presentity based on the maximum number of interactions and the presence information, and determine available real-time media types from the determined media statuses.

In one embodiment, the maximum number of interactions includes combinations of one or more of a maximum number of current real-time voice communication sessions, a maximum number of current real-time multimedia communication sessions and a maximum number of current real-time text communication sessions. In a further embodiment, the presence information includes a current number of real-time voice communication sessions engaged in by the presentity, a current number of real-time multimedia communication sessions engaged in by the presentity and a current number of real-time text communication sessions engaged in by the presentity.

In another embodiment, the media status for each media type is either: (i) INACTIVE when no device supporting the media type is active; (ii) ACTIVE when at least one device supporting the media type is active and no device is currently engaged in a real-time communication session for the media type; (iii) IN USE when a current number of real-time communication sessions engaged in by the presentity for the media type is less than the minimum of the maximum number of communication sessions for the media type and the number of currently available communication channels that support the media type; or (iv) BUSY when the current number of real-time communication sessions engaged in by the presentity for the media type is equal to the minimum of the maximum number of communication sessions for the media type and the number of currently available communication channels that support the media type.

In yet another embodiment, the presence server further determines an overall media status per media type for the presentity, in which the overall media status is either (i) INACTIVE when each of the media types is INACTIVE; (ii) ACTIVE when at least one of the media types is ACTIVE and none of the media types are IN USE or BUSY; (iii) IN USE when at least one of the media types is IN USE; or (iv) BUSY when each of the media types are BUSY.

In still another embodiment, the presence server can determine an availability for each of the media types for said presentity, in which the availability for one of the media types is either (i) available when the media type is IN USE or ACTIVE; or (ii) unavailable when the media type is either INACTIVE or BUSY. In addition, the presence server can determine an overall availability for the presentity, in which the overall availability is either (i) AVAILABLE when at least one of the media types is IN USE or ACTIVE; or (ii) UNAVAILABLE when each of the media types is either INACTIVE or BUSY.

In an additional embodiment, the presence server can represent each of the media types by a different type of token, create a pool of tokens based on the maximum number of interactions and the presence information, remove a token representing one of the media types for each real-time communication session of that media type engaged in by the presentity and determine the available media types from the remaining tokens in the pool of tokens.

Advantageously, embodiments of the present invention provide enhanced communications services by improving the efficiency of engaging in communication sessions with a presentity.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 is a block diagram illustrating a presence system capable of collecting and storing presence information and a maximum number of interactions per media type for a presentity and determining the media status and availability of a presentity, in accordance with embodiments of the present invention;
FIGURE 3 is a state-transition diagram illustrating an exemplary state machine of a presentity for an arbitrary media type, in accordance with embodiments of the present invention;
FIGURE 4 is a flowchart illustrating an exemplary process for determining a presentity's media status and availability, in accordance with embodiments of the present invention;
FIGURE 5 is a flowchart illustrating a more detailed exemplary process for determining a presentity's media status and availability, in accordance with embodiments of the present invention; and
FIGURE 6 illustrates an exemplary token model of media usage of a presentity, in accordance with embodiments of the present invention.

### DETAILED DESCRIPTION OF THE DRAWINGS

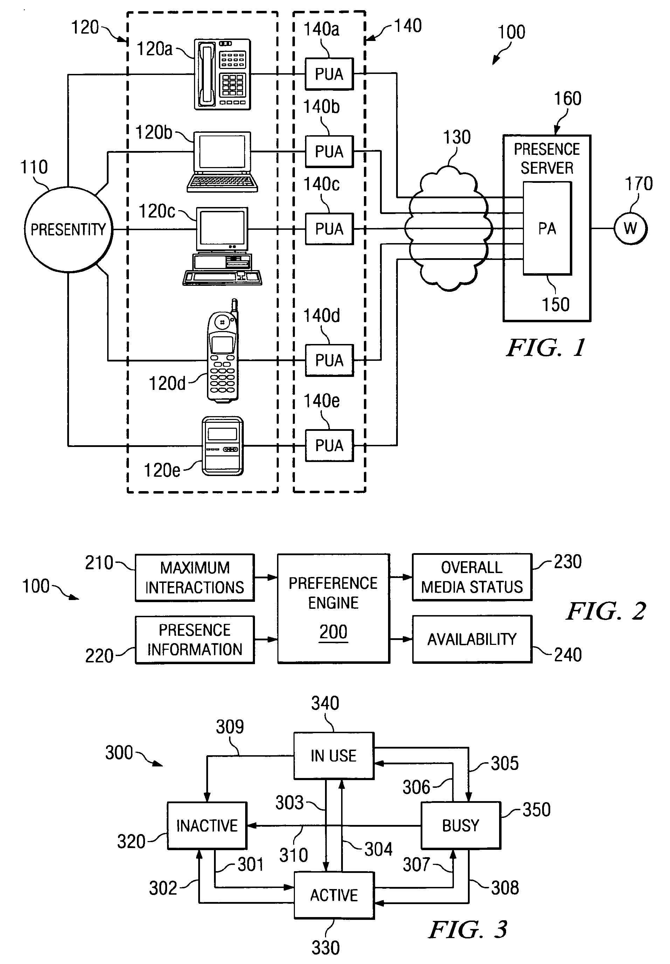

Referring to FIGURE 1, there is illustrated an exemplary presence system 100 capable of implementing various embodiments of the present invention. The presence system 100 includes a presentity 110 and one or more devices 120 associated with the presentity 110. The presentity 110 represents the callee and provides presence information on the callee's presence status to the presence system 100. Each device 120 is a physical communications device capable of sending and/or receiving communications over a communications network 130. Examples of such devices 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing preference information and presence information for the presentity 110. In FIGURE 1, a separate PUA 140 is shown for each device 120. However, it should be understood that in other embodiments, the number of PUAs 140 can vary based on the number and type of devices 120, the applications supported by the devices 120 and the system configuration. Each PUA 140 independently generates a component of the overall presence information for a presentity 110. Typically, PUA's 140 generate presence information when a change in presence status occurs. Examples of changes in presence status include, but are not limited to, turning on and off a device 120, modifying the registration from a device 120 and changing the instant messaging status on a device 120.

The presence information and preference information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. The PA 150 maintains the current complete presence information for the presentity 110 and provides the presence information to one or more watchers 170 (callers) of the presentity 110. The presence server 160 is a physical entity that can operate as either the PA 150 or as a proxy server for routing requests from watchers 170 to the PA 150. Thus, the PA 150 in combination with the presence server 160, is operable to receive preference and presence information of the presentity 110 from the PUAs 140, receive requests from watchers 170 for the presence information and provide the presence information to the watcher(s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

FIGURE 2 is a block diagram illustrating a presence system 100 capable of collecting and storing presence information and a maximum number of interactions per media type for a presentity and determining the media status and availability of a presentity, in accordance with embodiments of the present invention. As used herein, the term "media status" refers to one and only one of the following states at any particular time instance: INACTIVE, ACTIVE, IN USE, BUSY. In addition, as used herein, the term "availability" refers to one and only one of the following states at any particular time instance: AVAILABLE, UNAVAILABLE.

The presentity 110 (callee) enters a maximum number of interactions 210 per media type supported by various devices of the presentity into the presence system 100. The maximum number of interactions 210 for a particular media type indicates the maximum number of real-time interactions a user/presentity can handle before the particular media status enters the BUSY state. The maximum number of interactions 210 is specified by the user/presentity as part of his/her preference rules.

In one embodiment, the presentity can specify the maximum number of interactions for each media type separately. An example of single media type interactions is:
*text;5,* which indicates the user/presentity can simultaneously engage in five real-time text communication sessions on one or more devices before the status of the text media type enters the BUSY state;
*voice;2,* which indicates the user/presentity can simultaneously engage in two real-time voice communication sessions on one or more devices before the status of the voice media type enters the BUSY state; and
*mm;1,* which indicates the user/presentity can engage only one multimedia (video+) communication session at a time.

In another embodiment, the maximum number of interactions 210 can be used to specify potential combinations amongst the three media types: text, voice, mm (video+). An example of a combination media type interaction is:
*text;2 + voice;1,* which indicates the user /presentity can simultaneously engage in two real-time text communication sessions on one or more devices plus one real-time voice communication session on either the same device as one or more of the text communication sessions or a different device.

It should be understood that the configuration of the maximum number of interactions 210 by the presentity does not take into account the presentity's actual communication capability. For example, the user/presentity might only have one device supporting real-time voice communication, but he/she can still configure his/her maximum number of interactions 210 as *"voice;2".*

A preference component of the presence server, or as shown, a Preference Engine 200, receives the maximum number of interactions 210 and presence information 220 of the presentity. The presence information 220 includes each of the devices registered in the network to the presentity, along with the media types supported by each device and the media types supported by each application running on each device to obtain the media type capabilities of the presentity. In addition, the presence information 220 includes the on-going real-time communication sessions of the presentity, along with the currently activated media instances with the preference values of the presentity. For example, the presence information 220 can include a current number of real-time voice communication sessions engaged in by the presentity, a current number of real-time multimedia communication sessions engaged in by the presentity and a current number of real-time text communication sessions engaged in by the presentity.

Furthermore, in other embodiments, the presence information 220 can include an activity-media status mapping to update the media status of media types upon the start /termination of a scheduled activity, such as a meeting, out-to-lunch, steering a car, etc. For example, the presentity may enter preference data into the presence system specifying that no media types or only certain media types are available when the presentity's calendar indicates that the presentity is in a meeting.

From the maximum number of interactions 210 entered into the presence system 100 and the presence information 220 provided by the presence system 100, the Preference Engine determines the presentity's media status 230 and availability 240 for real-time communication. The media status information 230 can include the media status for each media type and/or the presentity's overall media status based on the media type media statuses. The availability information 240 can include the availability for each media type and/or the presentity's overall availability for real-time communication. The media status information 230 and availability information 240 can be distributed to the presentity's watchers in real-time.

It should be noted that the Preference Engine 200 (or preference component of the presence server) may be constructed or configured using hardware, software, firmware, or combination thereof for collecting and storing the maximum number of interactions 210 per media type for a presentity and preference information 220 related to the presentity to determine the media status 230 and availability 240 of the presentity. The presence server then distributes the media status 230 and availability 240 to the watchers of the presentity.

As an example, the Preference Engine 200 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein. In one embodiment, the Preference Engine 200 can include one or more processes, such as software applications providing an activity, a function, or a systematic sequence of tasks that produces a specified result, for determining the media status information 230 and availability information 240.

As discussed above, the media status 230 indicates the real-time states corresponding to the three media types for real-time communications (text, voice and multimedia). For each media type, the potential state at any time can be one of the following four states: INACTIVE, ACTIVE, IN USE or BUSY. For each media type, INACTIVE signifies that the user/presentity is not ready to process interactions with this specific media type. For example, the INACTIVE state applies when the presentity is not logged onto the network using any device capable of supporting that specific media type. The ACTIVE state indicates that the user/presentity is ready to process interactions with this specific media type. For example, the ACTIVE state applies when the presentity is logged onto the network using one or more devices capable of supporting that specific media type.

For each media type, the IN USE state informs the end-users/watchers that the presentity is involved in one or more communication sessions using this specific media type. However, the presentity is still capable of processing additional interactions with the same media type. For each media type, the BUSY state indicates that the presentity is currently engaged in communication sessions using the specific media type, and is not capable of engaging in any additional communication sessions with the same media type. For example, the BUSY state might be caused by limitations of resources (e.g., communication channels), or by limitations of the presentity's capability (e.g., the maximum number of interactions for the specific media type has been reached).

Referring now to FIGURE 3, there is illustrated a state-transition diagram representing the state machine 300 of the presentity for an arbitrary media type ∈ {text, voice, multimedia}. Initially, the state of an arbitrary media type for a presentity is in an INACTIVE state 320. In the INACTIVE state 320, no devices that support the particular media type are currently registered with the network. For example, before leaving work if the presentity logs-off from the network one or more devices associated with the presentity, such as a PDA and personal computer, and no devices associated with the presentity other than the PDA and personal computer support a particular media type (e.g., real-time text), the state for the real-time text media type is INACTIVE 320.

Continuing with the example of the real-time text media type, when the presentity registers one or more devices supporting the real-time text media type with the network (e.g., the presentity logs-on to the network his/her personal computer and PDA), the state of the real-time text media type transitions from the INACTIVE state 320 to the ACTIVE state 330 (as represented by arrow 301). Likewise, if the presentity logs-off the network his/her personal computer and PDA, the state of the real-time text media type would transition back from the ACTIVE state 330 to the INACTIVE state 320 (as represented by arrow 302).

While in the ACTIVE state 330, if the presentity becomes engaged in one or more communication sessions involving the real-time text media type (e.g., the presentity starts an instant messaging session with another user from his/her personal computer), and the number of communication sessions both does not exceed the maximum number of interactions for the real-time text media type and at least one application/device that supports the real-time text media type is not engaged in a communication session, the state of the real-time text media type transitions from the ACTIVE state 330 to the IN USE state 340 (as represented by arrow 303). Likewise, when the presentity discontinues all of the real-time text communication sessions, but otherwise remains registered with the network, the state of the real-time text media type transitions back from the IN USE state 340 to the ACTIVE state 330 (as represented by arrow 304). However, if the presentity discontinues all of the real-time text communication sessions by logging-off the network all of the devices supporting real-time text, the state of the real-time text media type transitions from the IN USE state 340 directly to the INACTIVE state 320 (as represented by arrow 309).

While in the ACTIVE state 330, if the presentity becomes engaged in one or more communication sessions involving the real-time text media type (e.g., the presentity starts an instant messaging session with another user from his/her personal computer), and the number of communication sessions either does exceed the maximum number of interactions for the real-time text media type or no applications/devices that support the real-time text media type are not currently engaged in a communication session, the state of the real-time text media type transitions from the ACTIVE state 330 to the BUSY state 350 (as represented by arrow 307). Likewise, when the presentity discontinues all of the real-time text communication sessions, but otherwise remains registered with the network, the state of the real-time text media type transitions back from the BUSY state 350 to the ACTIVE state 330 (as represented by arrow 308). However, if the presentity discontinues all of the real-time text communication sessions by logging-off the network all of the devices supporting real-time text, the state of the real-time text media type transitions from the BUSY state 350 directly to the INACTIVE state 330 (as represented by arrow 310).

While in the IN USE state 340, if the presentity becomes engaged in one or more additional communication sessions involving the real-time text media type, and the number of communication sessions either does exceed the maximum number of interactions for the real-time text media type or no applications/devices that support the real-time text media type are not currently engaged in a communication session, the state of the real-time text media type transitions from the IN USE state 340 to the BUSY state 350 (as represented by arrow 305). Likewise, when the presentity discontinues less than all of the real-time text communication sessions, but otherwise remains registered with the network, the state of the real-time text media type transitions back from the BUSY state 350 to the IN USE state 330 (as represented by arrow 306).

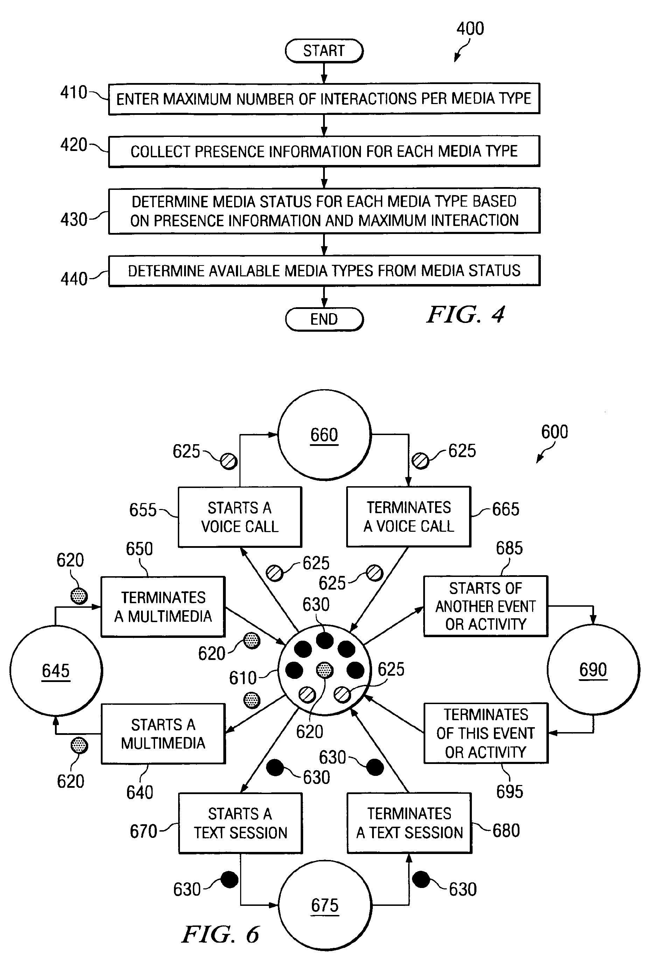

Referring now to FIGURE 4, there is illustrated an exemplary process 400 for determining a presentity's media status and availability, in accordance with embodiments of the present invention. Initially, at block 410, the presentity enters the maximum number of interactions per media type (e.g., in the single media type format and/or the combination media type format). At block 420, the presence system collects presence information for the presentity for each media type. At block 430, the media status for each media type is determined based on the presence information and the maximum number of interactions per media type specified by the presentity. Once the media status for each media type is determined, at block 440, the available media types are determined from the media status information.

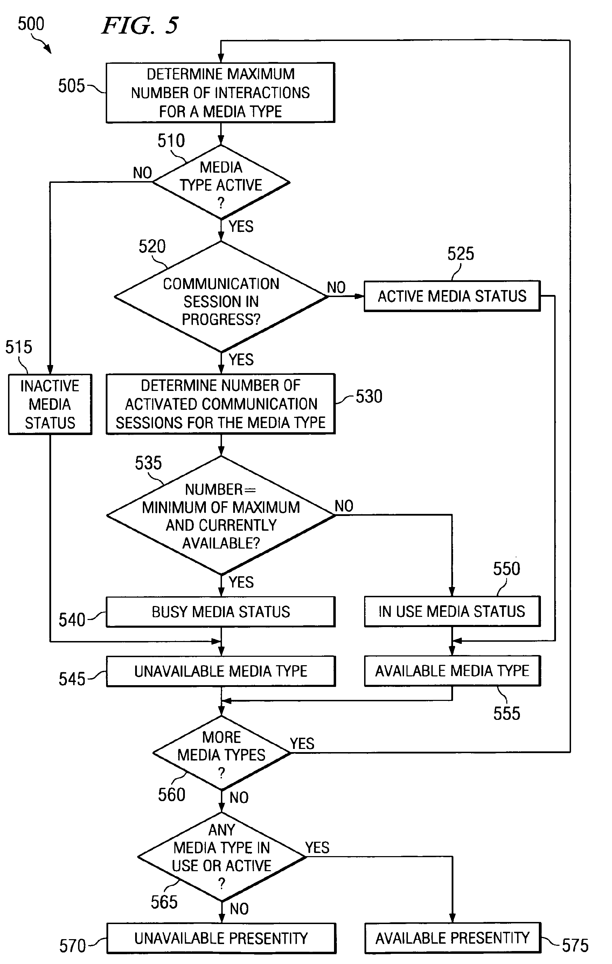

FIGURE 5 is a flowchart illustrating a more detailed exemplary process 500 for determining a presentity's media status and availability, in accordance with embodiments of the present invention. Initially, at block 505, the maximum number of interactions for a particular media type (single interactions or combination interactions) is determined. At block 510, the presence system determines if the media type is active, such that one or more devices supporting the media type are registered with the network. If no devices supporting the media type are registered with the network, at block 515, the media status for the media type is set to INACTIVE, and at block 545, the availability of the media type is set to UNAVAILABLE. However, if at least one device supporting the media type is registered with the network, the presence system determines if one or more communication sessions for the media type are currently in progress at block 520. If there are no communication sessions for the media type in progress, at block 525, the media status for the media type is set to ACTIVE, and at block 555 the availability of the media type is set to AVAILABLE.

If there are communication sessions for the media type in progress, at block 530, the number of activated communication sessions for the media type is determined. At block 535, the presence system determines if the number of activated communication sessions for the media type is equal to the minimum of the maximum number of interactions for the media type and the number of currently available communication channels that support the media type. If so, at block 540, the media status for the media type is set to BUSY, and at block 545, the availability of the media type is set to UNAVAILABLE. If the number of activated communication sessions is less than the minimum of the maximum number of interactions and the number of currently available communication channels that support the media type, at block 550, the media status for the media type is set to IN USE, and at block 555, the availability of the media type is set to AVAILABLE. This process is repeated for each media type at block 560.

Once the media status and availability for each media type is determined, at block 565, the presence system determines if the media status of any of the media types is IN USE or ACTIVE. If not, at block 570, the availability of the presentity is set to UNAVAILABLE. If so, at block 575, the availability of the presentity is set to AVAILABLE.

FIGURE 6 illustrates an exemplary token model 600 of media usage of a presentity, in accordance with embodiments of the present invention. A typical use of colored tokens is to represent different types of resources. For example, colored tokens play a significant role in simulating a wide range of distributed and concurrent systems using Colored Petri Nets (CP-Nets or CPNs) techniques. In embodiments of the present invention, colored tokens can be used to indicate presentity's communications capabilities corresponding to the three different media types for real-time communications. Thus, the colored tokens can be used to simulate the maximum number of interactions and the number of currently available channels of each of the media types.

In FIGURE 6, shadings are used in place of colors, and the set includes three different shadings: black 630, which corresponds to real-time text capabilities; striped 625, which corresponds to real-time voice capabilities; and dotted 620, which corresponds to real-time mm (video+) capabilities. Per presentity, the shaded tokens 620, 625 and 630 represent the available resources (i.e., media channels) that can be used in real-time communications. All of the tokens 620, 625 and 630 are initially put into a presentity pool 610 that is identified by the presentity's identifier (which is unique to the presence system). One or more tokens are consumed at the time a real-time communication session is started, and the same tokens are returned to the presentity pool 610 as soon as the communication session is terminated.

For example, when a presentity starts a multimedia session (represented by block 640), a dotted token 620 is moved from the presentity pool 610 to a multimedia communication session pool 645. Once the multimedia session is terminated (represented by block 650), the dotted token 620 is moved from the multimedia communication session pool 645 to the presentity pool 610. Likewise, when a presentity starts a voice communication session (represented by block 655), a striped token 625 is moved from the presentity pool 610 to a voice communication session pool 660. Once the voice session is terminated (represented by block 665), the striped token 625 is moved from the voice communication session pool 660 to the presentity pool 610.

In addition, when a presentity starts a text communication session (represented by block 670), a black token 630 is moved from the presentity pool 610 to a text communication session pool 675. Once the text communication session is terminated (represented by block 680), the black token 630 is moved from the text communication session pool 675 to the presentity pool 610. The model also allows for an activity-media status mapping to move tokens of one or more media types upon the start / termination of a scheduled activity. When a presentity starts an event or activity that affects the resources of one or more media types (represented by block 685), the token(s) representing the affected media types are moved from the presentity pool 610 to an event pool 690. Once the event/activity is terminated (represented by block 695), the token(s) are moved from the event pool 690 to the presentity pool 610.

The media status of the presentity and his/her communications availability are impacted by the number and type of shaded tokens in the resource pool 610. The overall media status of the presentity is set to INACTIVE when all of the tokens are in the presentity pool 610. For a media type ∈ {text, voice, multimedia}, if there is at least one token in the presentity pool 610 that corresponds to the media type, or the number of tokens for the media type outside of the presentity pool 610 is less than the minimum of the number of currently available communication channels that support this media type and the maximum number of interactions specified by the presentity for this media type, the media status for the media type is set to IN USE.

For a media type ∈ {text, voice, multimedia}, if there are no tokens in the presentity pool 610 that correspond to the specific media type or the number of tokens for the media type outside of the presentity pool 610 is equal to the minimum of the number of currently available communication channels that support this media type and the maximum number of interactions specified by the presentity for this media type, the media status for the media type is set to BUSY. For a media type ∈ {text, voice, multimedia}, the media status of the media type is set to ACTIVE when the number of tokens in the presentity pool 610 that correspond to the specific media type is equal to the minimum of the maximum number of interactions specified by the presentity and the number of currently activated and available media instances (communication channels) for this media type.

The presentity's availability for real-time communication depends on his/her overall media status. For example, the presentity is available if there is at least one media type of which the current state is ACTIVE or IN USE. Otherwise, the presentity is unavailable to watchers to engage in additional real-time communication sessions.

The following features, separately or in any combination, may also constitute advantageous embodiments of the described or claimed invention:
- The claimed and/or described presence system, wherein said presence server is further capable of receiving additional preference data related to one or more activities of said presentity and additional presence information identifying one or more activities currently engaged in by said presentity, wherein said presence server is further operable to determine said media status for each of said plurality of media types based on said additional preference data and said additional presence information;
- The claimed and/or described presence system, wherein said presence server is further operable to represent each of said plurality of media types by a different type of token, create a pool of tokens based on said maximum number of interactions and a number of currently available communication channels that support each of said plurality of media types, remove a token representing one of said plurality of media types for each real-time communication session of that media type engaged in by said presentity and determine said available media types from remaining tokens in said pool of tokens;
- The claimed and/or described presence server, wherein said presence server includes a preference engine capable of collecting and storing said maximum number of real-time interactions and said presence information, said preference engine being operable to determine said media status for each of said plurality of real-time media types and said available media types;
- The claimed and/or described method, wherein said maximum number of interactions includes combinations of one or more of a maximum number of current real-time voice communication sessions, a maximum number of current real-time multimedia communication sessions and a maximum number of current real-time text communication sessions;
- The claimed and/or described method, wherein said presence information represents a current number of real-time voice communication sessions engaged in by said presentity, a current number of real-time multimedia communication sessions engaged in by said presentity and a current number of real-time text communication sessions engaged in by said presentity;
- The claimed and/or described method, further comprising the step of: determining an overall media status for said presentity, said overall media status being either: (i) inactive when each of said plurality of media types is inactive, (ii) active when at least one of said plurality of media types is active and none of said plurality of media types are in use or busy, (iii) in use when at least one of said plurality of media types is in use, or (iv) busy when each of said plurality of media types are busy;
- The claimed and/or described method, further comprising the step of: determining an overall availability for said presentity, said overall availability being either: (i) available when at least one of said plurality of media types is in use or active, or (ii) unavailable when each of said plurality of media types is either inactive or busy;
- The claimed and/or described method, wherein said step of determining said available media types further comprises: determining an availability for each of said plurality of media types for said presentity, said availability for a select one of said plurality of media types being either: (i) available when said select media type is in use or active, or (ii) unavailable when said select media type is either inactive or busy;
- The claimed and/or described method, further comprising the steps of: receiving additional preference data related to one or more activities of said presentity; and receiving additional presence information identifying one or more activities currently engaged in by said presentity, wherein said media status for each of said plurality of media types is determined based on said additional preference data and said additional presence information;
- The claimed and/or described method, wherein said step of determining said available media types further comprises: representing each of said plurality of media types by a different type of token; creating a pool of tokens based on said maximum number of interactions and said presence information; removing a token representing one of said plurality of media types from said pool of tokens for each real-time communication session of that media type engaged in by said presentity; and determining said available media types from remaining tokens in said pool of tokens;
- The claimed and/or described method, wherein said step of creating said pool of tokens further comprises: receiving additional preference data related to one or more activities of said presentity and additional presence information identifying one or more activities currently engaged in by said presentity; and removing all of said tokens associated with one or more of said plurality of media types from said pool of tokens for each of said one or more activities engaged in by said presentity based on said additional presence data and said additional preference data.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A presence system, comprising:
a presence server capable of receiving from a presentity a maximum number of real-time interactions per real-time media types supported by said presentity, said presence server being further capable of receiving presence information identifying real-time communication sessions currently engaged in by said presentity;
wherein said presence server is operable to determine a media status for each of a plurality of real-time media types supported by said presentity based on said maximum number of interactions and said presence information, and determine available ones of said plurality of real-time media types from each said media status.

2. The presence system of Claim 1, wherein said maximum number of interactions includes a maximum number of current real-time voice communication sessions, a maximum number of current real-time multimedia communication sessions and a maximum number of current real-time text communication sessions.

3. The presence system of Claim 1, wherein said maximum number of interactions includes combinations of one or more of a maximum number of current real-time voice communication sessions, a maximum number of current real-time multimedia communication sessions and a maximum number of current real-time text communication sessions.

4. The presence system of Claim 3, wherein said presence information includes a current number of real-time voice communication sessions engaged in by said presentity, a current number of real-time multimedia communication sessions engaged in by said presentity and a current number of real-time text communication sessions engaged in by said presentity.

5. The presence system of Claim 1, wherein said media status for a select one of said plurality of media types is either (i) inactive when no device supporting said select media type is active; (ii) active when at least one device supporting said select media type is active and no device is currently engaged in a real-time communication session for said select media type; (iii) in use when a current number of real-time communication sessions engaged in by said presentity for said select media type is less than the minimum of a maximum number of communication sessions for said select media type and a number of currently available communication channels that support said select media type; or (iv) busy when said current number of real-time communication sessions engaged in by said presentity for said select media type is equal to the minimum of said maximum number of communication sessions for said select media type and said number of currently available communication channels that support said select media type.

6. The presence system of Claim 5, wherein said presence server is further operable to determine an overall media status for said presentity, said overall media status being either (i) inactive when each of said plurality of media types is inactive; (ii) active when at least one of said plurality of media types is active and none of said plurality of media types are in use or busy; (iii) in use when at least one of said plurality of media types is in use; or (iv) busy when each of said plurality of media types are busy.

7. The presence system of Claim 6, wherein said presence server is further operable to determine an overall availability for said presentity, said overall availability being either (i) available when at least one of said plurality of media types is in use or active; or (ii) unavailable when each of said plurality of media types is either inactive or busy.

8. The presence system of Claim 5, wherein said presence server is further operable to determine an availability for each of said plurality of media types for said presentity, said availability for a select one of said plurality of media types being either (i) available when said select media type is in use or active; or (ii) unavailable when said select media type is either inactive or busy.

9. A method for determining a presentity's media status and availability for engaging in real-time communication sessions in a presence system, comprising the steps of:
collecting and storing a maximum number of interactions real-time interactions per real-time media types supported by said presentity;
receiving presence information identifying real-time communication sessions currently engaged in by said presentity;
determining a media status for each of a plurality of real-time media types supported by said presentity based on said maximum number of interactions and said presence information; and
determining available ones of said plurality of real-time media types from each said media status.

10. The method of Claim 9, wherein said determining said media status further comprises:
determining said media status for a select one of said plurality of media types is either:
(i) inactive when no device supporting said select media type is active,
(ii) active when at least one device supporting said select media type is active and no device is currently engaged in a real-time communication session for said select media type,
(iii) in use when a current number of real-time communication sessions engaged in by said presentity for said select media type is less than the minimum of a number of currently available communication channels that support said select media type and a maximum number of communication sessions for said select media type, or
(iv) busy when said current number of real-time communication sessions engaged in by said presentity for said select media type is equal to the minimum of said number of currently available communication channels that support said select media type and said maximum number of communication sessions for said select media type.
